# EUROPEAN PATENT APPLICATION

(11) **EP 4 704 188 A1**
(43) Date of publication of application: **04.03.2026**
(21) Application number: 24796778.9
(22) Date of filing: 09.04.2024
(51) Int. Cl.: H01M 4/525, H01M 4/36, H01M 4/62

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(30) Priority: 28.04.2023 JP 2023074937
(71) Applicant: Panasonic Intellectual Property Management Co., Ltd., Kadoma-shi, Osaka 571-0057 (JP)
(72) Inventor: KO, Takashi, Kadoma-shi, Osaka 571-0057 (JP); KAWAKITA, Akihiro, Kadoma-shi, Osaka 571-0057 (JP); DEGUCHI, Masaki, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2024/014369
(87) International publication number: WO 2024/225022

(57) **Abstract**

A positive electrode active material for nonaqueous electrolyte secondary batteries comprises first lithium nickel oxide particles that have an average particle diameter of 8 µm to 30 µm inclusive, and second lithium nickel oxide particles that have an average particle diameter of 6 µm or less. A sulfonic acid compound represented by general formula I is present on the surfaces of the second lithium nickel oxide particles. If X mass% is the ratio of the mass of a sulfonic acid compound that is present on the surfaces of the first lithium nickel oxide particles to the mass of the first lithium nickel oxide particles and Y mass% is the ratio of the mass of the sulfonic acid compound that is present on the surfaces of the second lithium nickel oxide particles to the mass of the second lithium nickel oxide particles, X and Y satisfy the relational expression Y > X. 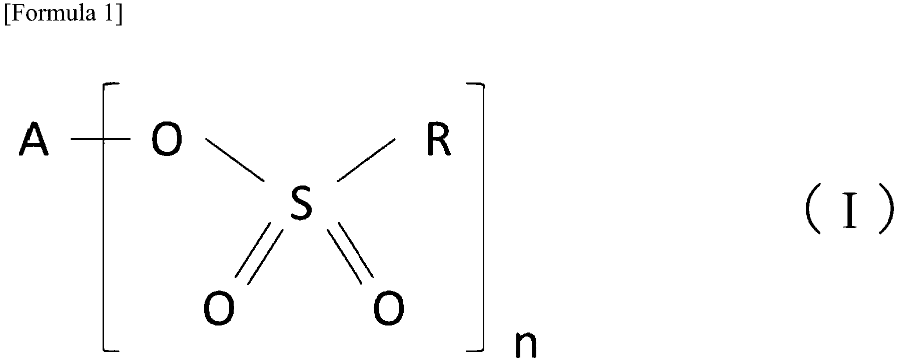 In the formula, A represents a group 1 element or a group 2 element; R represents a hydrocarbon group; and n is 1 or 2.

## Description

### TECHNICAL FIELD

The present disclosure relates to a positive electrode active material for a non-aqueous electrolyte secondary battery and a non-aqueous electrolyte secondary battery.

### BACKGROUND ART

Conventionally, lithium-containing composite oxides containing transition metals such as Ni, Co, and Mn have been used as high-capacity positive electrode active materials. For example, Patent Literature 1 discloses a technique for improving battery capacity and rate characteristics by using a positive electrode active material obtained by mixing two lithium cobalt oxides having different compositions and average particle diameters at a predetermined volume ratio.

### CITATION LIST

### PATENT LITERATURE

PATENT LITERATURE 1: Japanese Unexamined Patent Application Publication No. 2006-156004

### SUMMARY

However, in the technique disclosed in Patent Literature 1, gas may be generated inside the battery after storage in a high-temperature environment by using a positive electrode active material having a relatively small average particle diameter, potentially causing a problem in the reliability of the battery. If a coating layer is formed on the surface of the positive electrode active material, for example, to suppress the generation of gas, the charge capacity may decrease. Patent Literature 1 does not consider compatibility between the high-temperature storage characteristics and the charge capacity of the battery, and there is still room for improvement.

An object of the present disclosure is to provide a positive electrode active material capable of achieving both high-temperature storage characteristics and charge capacity of a battery.

The positive electrode active material for a non-aqueous electrolyte secondary battery in one aspect of the present disclosure includes: first lithium nickel oxide particles having an average particle diameter of greater than or equal to 8 µm and less than or equal to 30 µm; and second lithium nickel oxide particles having an average particle diameter of less than or equal to 6 µm, wherein a sulfonate compound represented by the general formula I is present on surfaces of the second lithium nickel oxide particles, and when a proportion of a mass of the sulfonate compound present on the surfaces of the first lithium nickel oxide particles relative to a mass of the first lithium nickel oxide particles is defined as X mass%, and a proportion of a mass of the sulfonate compound present on surfaces of the second lithium nickel oxide particles relative to a mass of the second lithium nickel oxide particles is defined as Y mass%, X and Y satisfy a relation Y > X: 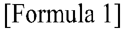 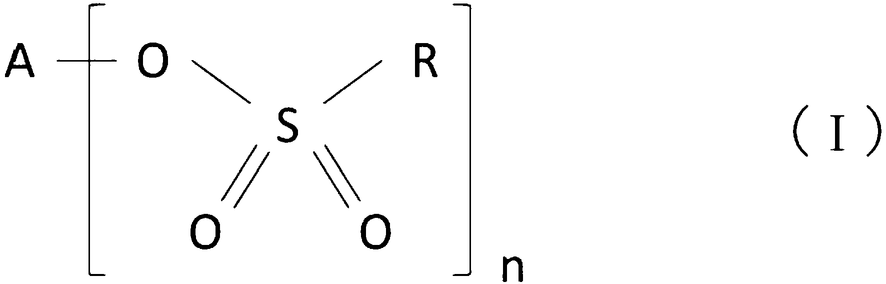 wherein A represents a group I element or a group II element, R represents a hydrocarbon group, and n represents 1 or 2.

The non-aqueous electrolyte secondary battery in one aspect of the present disclosure comprises a positive electrode including the positive electrode active material for a non-aqueous electrolyte secondary battery, a negative electrode, and a non-aqueous electrolyte.

The positive electrode active material for a non-aqueous electrolyte secondary battery in one aspect of the present disclosure can improve the high-temperature storage characteristics while suppressing the decrease in the charge capacity of the non-aqueous electrolyte secondary battery.

### BRIEF DESCRIPTION OF DRAWING

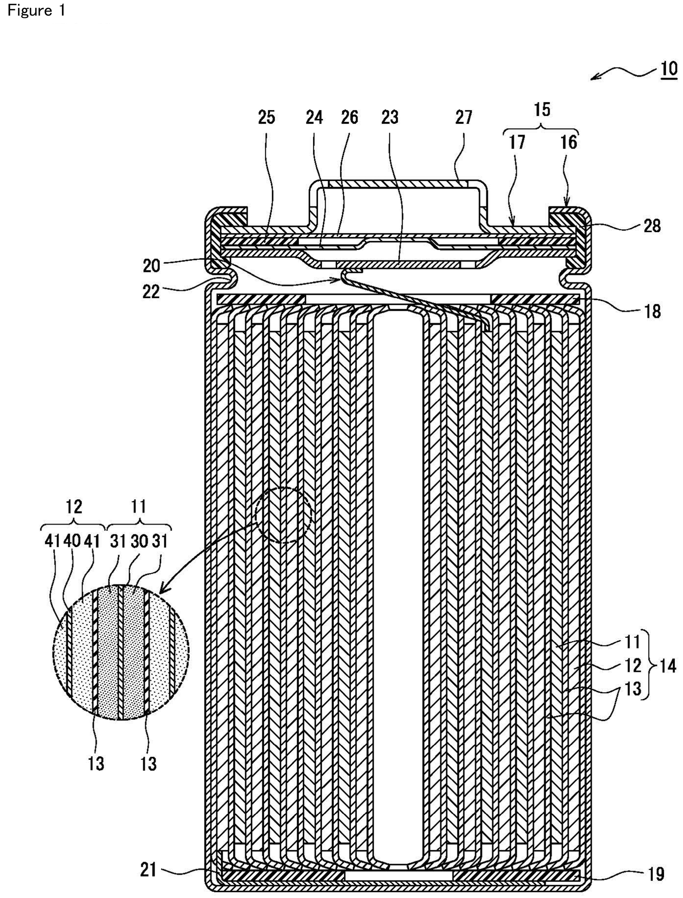

FIG. 1 is a longitudinal sectional view of a non-aqueous electrolyte secondary battery as an example of an embodiment.

### DESCRIPTION OF EMBODIMENTS

In recent years, non-aqueous electrolyte secondary batteries have come to be used in a wide range of applications and increasingly required to improve battery characteristics. As described in Patent Literature 1, the use of a mixture of two lithium-containing composite oxides having different average particle diameters as the positive electrode active material enables higher capacity. However, a positive electrode active material having a relatively small average particle diameter possesses a large surface area per unit mass and, therefore, tends to readily react with a non-aqueous electrolyte. As a result, after storage under high-temperature conditions, gas may be generated inside the battery, potentially causing reliability issues of the battery. As a result of intensive studies to solve the issues, the present inventors have found that both high-temperature storage characteristics and charge capacity of a battery can be achieved by using first lithium nickel oxide particles having an average particle diameter of greater than or equal to 8 µm and less than or equal to 30 µm and second lithium nickel oxide particles having an average particle diameter of less than or equal to 6 µm while disposing more sulfonate compounds in the second lithium nickel oxide particles than in the first lithium nickel oxide particles.

Hereinafter, one aspect of an embodiment of the non-aqueous electrolyte secondary battery according to the present disclosure will be described in detail. Hereinafter, a cylindrical battery including a wound electrode assembly accommodated in a cylindrical outer case will be illustrated, but the electrode assembly is not limited to the wound-type, and may be a laminate type in which a plurality of positive electrodes and a plurality of negative electrodes are alternately stacked one by one via separators. The outer case is not limited to the cylindrical shape, and may be, for example, a square shape, a coin shape, or the like, or may be a battery case constituted by a laminated sheet including a metal layer and a resin layer.

FIG. 1 is a longitudinal sectional view of a non-aqueous electrolyte secondary battery 10 as an example of an embodiment. As illustrated in FIG. 1, the non-aqueous electrolyte secondary battery 10 comprises an electrode assembly 14, a non-aqueous electrolyte (not shown), and a battery case 15 that houses the electrode assembly 14 and the non-aqueous electrolyte. The electrode assembly 14 has a wound structure in which a positive electrode 11 and a negative electrode 12 are wound with a separator 13. The battery case 15 is composed of a bottomed cylindrical exterior can 16 and a sealing assembly 17 blocking an opening portion of the exterior can 16.

The electrode assembly 14 is composed of a strip-shaped positive electrode 11, a strip-shaped negative electrode 12, two strip-shaped separators 13, a positive electrode tab 20 bonded to the positive electrode 11, and a negative electrode tab 21 bonded to the negative electrode 12. The negative electrode 12 is formed to have slightly larger dimensions than those of the positive electrode 11 in order to prevent precipitation of lithium. In other words, the negative electrode 12 is formed longer in the longitudinal direction and the width direction (lateral direction) than the positive electrode 11. The two separators 13 are formed to have at least slightly larger dimensions than those of the positive electrode 11 and are disposed to sandwich the positive electrode 11, for example.

The non-aqueous electrolyte secondary battery 10 comprises insulating plates 18 and 19 respectively disposed at the upper and lower sides of the electrode assembly 14. In the example illustrated in FIG. 1, the positive electrode tab 20 attached to the positive electrode 11 extends through a through-hole in the insulating plate 18 to the side of the sealing assembly 17, and the negative electrode tab 21 attached to the negative electrode 12 extends outside the insulating plate 19 to the side of the bottom of the exterior can 16. The positive electrode tab 20 is connected to the lower surface of a bottom plate 23 of the sealing assembly 17, by means of welding or the like, and a cap 27 of the sealing assembly 17 electrically connected to the bottom plate 23 serves as a positive electrode terminal. The negative electrode tab 21 is connected to the inner surface of the bottom of the exterior can 16 by means of welding or the like, and the exterior can 16 serves as a negative electrode terminal.

The exterior can 16 is, for example, a bottomed cylindrical metal container. A gasket 28 is provided between the exterior can 16 and the sealing assembly 17 to seal the inner space of the battery case 15. The exterior can 16 has a grooved portion 22 to support the sealing assembly 17, the grooved portion being formed by externally pressing the portion of the side surface portion, for example. The grooved portion 22 is preferably annularly formed along the peripheral direction of the exterior can 16, supporting the sealing assembly 17 by the upper surface thereof.

The sealing assembly 17 has a structure in which the bottom plate 23, a lower vent member 24, an insulating member 25, an upper vent member 26, and the cap 27 are layered, in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the non-aqueous electrolyte secondary battery 10, particularly, the positive electrode active material included in the positive electrode mixture layer 31 constituting the positive electrode 11 will be described in detail.

### [Positive Electrode]

The positive electrode 11 has, for example, a positive electrode current collector 30 and a positive electrode mixture layer 31 formed on the surface of the positive electrode current collector 30. The positive electrode mixture layer 31 is preferably formed on both the surfaces of the positive electrode current collector 30. As the positive electrode current collector 30, a foil of a metal that is stable in the potential range of the positive electrode 11, such as aluminum or an aluminum alloy, and a film with the metal disposed on the surface layer, or the like can be used. The positive electrode mixture layer 31 may include a positive electrode active material, a conductive agent, and a binder. The thickness of the positive electrode mixture layer 31 is greater than or equal to 10 µm and less than or equal to 150 µm, for example, on one side of the positive electrode current collector 30. The positive electrode 11 can be produced, for example, by coating a positive electrode mixture slurry including a positive electrode active material, a conductive agent, and a binder on the surface of the positive electrode current collector 30, drying the coating, and rolling the dried coating to form the positive electrode mixture layer 31 on both the surfaces of the positive electrode current collector 30.

Examples of the conductive agent included in the positive electrode mixture layer 31 include carbon materials such as acetylene black (AB), carbon black (CB) including Ketjen black, carbon nanotubes (CNT), and graphene, and graphite. These materials may be used singly or in combination with greater than or equal to 2 kinds thereof. The content ratio of the conductive agent in the positive electrode mixture layer 31 is, for example, greater than or equal to 0.1 mass% and less than or equal to 10 mass% relative to the total mass of the positive electrode mixture layer 31.

Examples of the binder included in the positive electrode mixture layer 31 include fluorine-based resins such as polytetrafluoroethylene (PTFE) and polyvinylidene fluoride (PVDF), polyacrylonitrile (PAN), polyimide-based resins, acrylic-based resins, and polyolefin-based resins. These materials may be used singly or in combination with greater than or equal to 2 kinds thereof. The content ratio of the binder in the positive electrode mixture layer 31 is, for example, greater than or equal to 0.1 mass% and less than or equal to 10 mass% relative to the total mass of the positive electrode mixture layer 31.

The positive electrode active material included in the positive electrode mixture layer 31 includes first lithium nickel oxide particles and second lithium nickel oxide particles having an average particle diameter smaller than that of the first lithium nickel oxide particles. This configuration increases the packing density of the positive electrode active material in the positive electrode mixture layer 31, thereby improving battery capacity. The average particle diameter refers to the volume-based median diameter (D50) of secondary particles. The D50 means the particle diameter at which the cumulative frequency in the volume-based particle size distribution reaches 50% from the smaller particle side, which is also referred to as the median diameter. The particle size distribution of the lithium nickel oxide particles can be measured using a laser diffraction particle size distribution measuring device (e.g., MT3000II, manufactured by MicrotracBEL Corp.), with water used as the dispersion medium.

The average particle diameter of the first lithium nickel oxide particles is greater than or equal to 8 µm and less than or equal to 30 µm, preferably greater than or equal to 8 µm and less than or equal to 25 µm, and more preferably greater than or equal to 10 µm and less than or equal to 20 µm. The average particle diameter of the second lithium nickel oxide particles is less than or equal to 6 µm, preferably greater than or equal to 0.5 µm and less than or equal to 6 µm, and more preferably greater than or equal to 1 µm and less than or equal to 6 µm.

The first lithium nickel oxide particles have a value of (D90 - D10)/average particle diameter of, for example, less than or equal to 0.6. Accordingly, the first lithium nickel oxide particles have a sharp distribution. The second lithium nickel oxide particles have a value of (D90 - D10)/average particle diameter of, for example, less than or equal to 1.0. Accordingly, the second lithium nickel oxide particles have a sharp distribution. When both the first lithium nickel oxide particles and second lithium nickel oxide particles have sharp distributions, the effects of the present disclosure become more pronounced. D10 and D90 of the lithium nickel oxide particles mean the particle diameters at which the cumulative frequency in the volume-based particle size distribution reaches 10% and 90%, respectively, from the smaller particle side. The D10 and D90 of the lithium nickel oxide particles can be calculated from the particle size distribution in the same manner as the above-described average particle diameter (D50).

Each of the first lithium nickel oxide particles and the second lithium nickel oxide particles includes, for example, secondary particles formed by aggregation of primary particles. The particle diameter of the primary particles forming the secondary particles of the first lithium nickel oxide particles is, for example, greater than or equal to 0.02 µm and less than or equal to 1 µm. The particle diameter of the primary particles forming the secondary particles of the second lithium nickel oxide particles is also, for example, greater than or equal to 0.02 µm and less than or equal to 1 µm. The particle diameter of the primary particles of the lithium nickel oxide particles is calculated by measuring the diameters of 100 circumscribed circles of primary particles extracted from the analysis of SEM images of cross sections of the secondary particles and averaging the measured values.

The second lithium nickel oxide particles may be secondary particles formed from either single primary particles (single crystal particles) or an aggregate of greater than or equal to 2 and less than or equal to 5 primary particles.

The mass ratio between the first lithium nickel oxide particles and the second lithium nickel oxide particles included in the positive electrode mixture layer 31 is, for example, 50:50. The mass ratio (X) between first lithium nickel oxide particles and second lithium nickel composite oxides is not limited to 50:50, but preferably, there is no significant difference in the addition amount from the viewpoint of high capacity and the like. Specifically, the mass ratio (X) preferably meets 90:10 ≤ X ≤ 50:50, more preferably 80:20 ≤ X ≤ 60:40.

The lithium nickel oxide particles may have, for example, a layered structure belonging to the space group R-3m and a layered structure belonging to the space group C2/m. Among them, a layered structure belonging to the space group R-3m is preferable in terms of high capacity, stability of the crystal structure, and the like.

The first lithium nickel oxide particles and the second lithium nickel oxide particles each preferably contain Ni in an amount of greater than or equal to 50 mol%, more preferably greater than or equal to 80 mol%, and still more preferably greater than or equal to 90 mol%, relative to the total molar amount of metal elements excluding Li, and the content of Co is preferably lower. Accordingly, the effects of the present application can be enhanced.

The composition of the first lithium nickel oxide particles and the composition of the second lithium nickel oxide particles may be different from each other, for example, the difference between the contents of Ni in the large particles and the small particles may be within 20%, the difference between the contents of Co may be within 20%, and the difference between the contents of Mn may be within 20%. For example, the amount of Ni in the small particles relative to the large particles may be changed in a range of greater than or equal to 2% and less than or equal to 10%, and the amount of Co in a range of greater than or equal to 2% and less than or equal to 10%. Reducing the amount of Ni by greater than or equal to 2% and less than or equal to 10% and increasing the amount of Co by greater than or equal to 2% and less than or equal to 10%, for example, substituting 5% of Ni with Co, in the small particles relative to the large particles may reduce cycle durability and the amount of gas generated during high-temperature storage. Reducing the amount of Ni by greater than or equal to 2% and less than or equal to 10% and increasing the amount of Mn by greater than or equal to 2% and less than or equal to 10% in the small particles relative to the large particles may improve the thermal stability of the battery. Increasing the amount of Ni by greater than or equal to 2% and less than or equal to 10% and reducing the amount of Co by greater than or equal to 2% and less than or equal to 10% in the small particles relative to the large particles may improve the capacity. Increasing the amount of Ni by greater than or equal to 2% and less than or equal to 10% and reducing the amount of Mn by greater than or equal to 2% and less than or equal to 10% in the small particles relative to the large particles may improve the capacity. When varying the amount of Ni in the small particles relative to the large particles, the amounts of Co and Mn may also be varied simultaneously, or may be substituted with other elements such as Me described later. Alternatively, the amounts of Mn and Co may be varied without changing the amount of Ni in the small particles relative to the large particles. For example, substituting Co with Mn (e.g., 5%) may improve safety, while substituting Mn with Co (e.g., 2%) may enhance output.

The lithium nickel oxide particles are represented, for example, by the general formula LiₐNiₓCo_{y}Mn_{z}Me_{w}O_{b} (where 0.8 ≤ a ≤ 1.2, 0.5 ≤ x ≤ 0.96, 0 ≤ y ≤ 0.3, 0 ≤ z ≤ 0.4, 0 ≤ w ≤ 0.1, 1.9 ≤ b ≤ 2.1, and x + y + z + w = 1; Me represents one or more elements selected from the group consisting of Nb, Ti, Zr, W, Si, Ca, Sr, and B). The molar fractions of the metal elements contained in the lithium nickel oxide particles can be measured, for example, by inductively coupled plasma (ICP) emission spectroscopic analysis.

A sulfonate compound represented by the general formula I is present on surfaces of the second lithium nickel oxide particles: 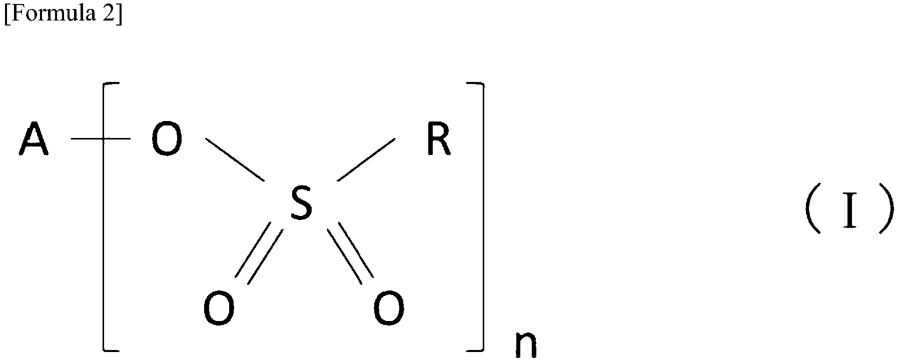 wherein A represents a group I element or a group II element, R represents a hydrocarbon group, and n represents 1 or 2.

When a proportion of the mass of the sulfonate compound present on the surfaces of the first lithium nickel oxide particles relative to the mass of the first lithium nickel oxide particles is defined as X mass%, and a proportion of the mass of the sulfonate compound present on surfaces of the second lithium nickel oxide particles relative to the mass of the second lithium nickel oxide particles is defined as Y mass%, X and Y satisfy a relation Y > X. Note that a sulfonate compound may not be present on surfaces of the first lithium nickel oxide particles. Thus, it is possible to improve the high-temperature storage characteristics while suppressing the decrease in the charge capacity of the non-aqueous electrolyte secondary battery. The amount of gas generated can be suppressed by disposing more sulfonate compounds on the surfaces of the second lithium nickel oxide particles, which are more active than the first lithium nickel oxide particles. In addition, the decrease in charge capacity can be suppressed by reducing the amount of the sulfonate compound present on the surfaces of the first lithium nickel oxide particles to a level that does not adversely affect the amount of gas generated.

Y satisfies, for example, Y ≤ 1. The lower limit of Y is, for example, 0.1. In addition, X satisfies, for example, 0 ≤ X ≤ 0.5. Y/X preferably meets 1.5 ≤ Y/X, and more preferably 10 ≤ Y/X. The upper limit of Y/X is, for example, 50.

X and Y are measured, for example, as follows.
(1) The total amount of S element included in the positive electrode mixture layer 31 is quantified by ICP.
(2) The surface of the positive electrode mixture layer 31 is observed with an electron probe microanalyzer (EPMA), and the diameters of the first lithium nickel oxide particles and the second lithium nickel oxide particles and the amounts of the sulfonate compound present on the surfaces of the first lithium nickel oxide particles and the second lithium nickel oxide particles are calculated. For the first lithium nickel oxide particles and the second lithium nickel oxide particles, 30 pieces are measured each.
(3) The ratio of sulfonate compounds present on the surfaces of the first lithium nickel oxide particles and the second lithium nickel oxide particles are calculated from the results of EPMA analysis and multiplying the ratio with the total amount of S element of the ICP analysis result to calculate X and Y.

In the general formula I, A preferably represents a group I element and more preferably Li. Accordingly, a decrease in charge capacity can be further suppressed. Note that when A represents a group I element, n = 1.

In the general formula I, R preferably represents an alkyl group. R more preferably represents an alkyl group having less than or equal to 5 carbon atoms, even more preferably an alkyl group having less than or equal to 3 carbon atoms, and particularly preferably a methyl group. In addition, some of the carbon-bonded hydrogens in R may be replaced with fluorine, but not all of the carbon-bonded hydrogens in R are replaced with fluorine. The smaller the molecular weight of R, the more the decrease in the charge capacity can be suppressed.

Examples of the sulfonate compound include lithium methanesulfonate, lithium ethanesulfonate, lithium propanesulfonate, sodium methanesulfonate, magnesium methanesulfonate, and lithium fluoromethanesulfonate.

The presence of the sulfonate compound on the surfaces of the lithium nickel oxide particles can be confirmed by Fourier transform infrared spectroscopy (FT-IR). In an infrared absorption spectrum obtained by FT-IR, the lithium nickel oxide particles may have an absorption peak at at least one or more positions near 1238 cm⁻¹, 1175 cm⁻¹, 1065 cm⁻¹, or 785 cm⁻¹.

In the infrared absorption spectrum obtained by FT-IR, for example, lithium nickel oxide particles including lithium methanesulfonate have absorption peaks near 1238 cm⁻¹, 1175 cm⁻¹, 1065 cm⁻¹, and 785 cm⁻¹. The peaks near 1238 cm⁻¹, 1175 cm⁻¹, and 1065 cm⁻¹ are absorption peaks caused by SO stretching vibration derived from lithium methanesulfonate. The peak near 785 cm⁻¹ is an absorption peak caused by CS stretching vibration derived from lithium methanesulfonate.

In the lithium nickel oxide particles including a sulfonate compound other than lithium methanesulfonate, similarly to the lithium nickel oxide particles including lithium methanesulfonate, an absorption peak derived from the sulfonate compound included in the lithium nickel oxide particles can be identified, and the presence of the sulfonate compound on the surfaces of the lithium nickel oxide particles can be confirmed by ICP, atomic absorption spectrometry, X-ray photoelectron spectroscopy (XPS), radiation XRD measurement, TOF-SIMS, or the like.

A metal compound may be present on the surfaces of the lithium nickel oxide particles. The metal compound includes, for example, one or more metal elements selected from the group consisting of Sr, Ca, W, Zr, rare earths, and Al. Examples of the Sr-containing compound include SrO, Sr(OH)₂, and SrCO₃. Examples of the compound containing Ca include CaO, Ca(OH)₂, and CaCO₃. Examples of the compound containing W include WO₃. Examples of the compound containing Al include Al₂O₃. Examples of the Zr-containing compound include ZrO₂, Zr(OH)₄, Zr(CO₃)₂, and Zr(SO₄)₂·4H₂O. Examples of the compound containing rare-earth include oxides, hydroxides, carbonates, sulfates, nitrates, and phosphates of rare earths. The metal compound may contain a plurality of these metal elements, and examples thereof include CaWO₄, SrWO₄, SrAlO₄, and CaAlO₄. The metal compound may further contain Li, and examples thereof include lithium tungstate.

A non-metal compound may be present on the surfaces of the lithium nickel oxide particles. The non-metal compound includes, for example, one or more non-metal elements selected from the group consisting of P and B. Examples of the compound containing P include Li₃₋ₓHₓPO₄ (0 ≤ x ≤ 3). Examples of the compound containing B include H₃BO₃, Li₃BO₃, Li₂B₄O₇, and LiBO₂. In particular, the boron compound is preferably present on the surface.

Next, an example of a method for producing the positive electrode active material according to the present embodiment will be described. The method for producing the positive electrode active material includes, for example, a synthesis step, a washing step, a drying step, and an addition step.

In the synthesis step, a metal oxide containing greater than or equal to 25 mol% and less than or equal to 96 mol% of Ni, greater than or equal to 15 mol% and less than or equal to 40 mol% of Co, and greater than or equal to 5 mol% and less than or equal to 50 mol% of Mn is mixed with a Li compound and fired to obtain a lithium nickel oxide. The average particle diameter of the first lithium nickel oxide particles and second lithium nickel oxide particles can be adjusted according to conditions such as the size of a metal hydroxide, firing temperature, and time.

The metal oxide can be obtained, for example, by adding an alkaline solution such as sodium hydroxide dropwise while stirring a solution of a metal salt including Ni, Co, Mn, and an arbitrary metal element (Al, Fe, etc.), adjusting the pH to the alkaline side (e.g., greater than or equal to 8.5 and less than or equal to 12.5), thereby precipitating (coprecipitating) a composite hydroxide including Ni, Co, Mn, and an arbitrary metal element, and heat-treating the composite hydroxide. The heat treatment temperature is not particularly limited, but is in the range of, for example, greater than or equal to 300°C and less than or equal to 600°C.

Examples of the Li compounds include Li₂O₃, LiOH, Li₂O₂, Li₂O, LiNO₃, LiNO₂, Li₂SO₄, LiOH·H₂O, LiH, and LiF. The mixing ratio of the metal oxide and the Li compound is preferably such that the molar ratio of metal elements excluding Li:Li is in the range of greater than or equal to 1:0.98 and less than or equal to 1:1.1, for example, from the viewpoint of facilitating the adjustment of the parameters within the above defined ranges. When the metal oxide and the Li compound are mixed, other metal raw materials may be added, if needed. Here, the other metal raw materials are oxides and the like including metal elements other than the metal elements constituting the metal oxide.

A mixture of the metal oxide and the Li compound is fired, for example, under an oxygen atmosphere. The firing conditions may be a temperature rising rate at greater than or equal to 450°C and less than or equal to 680°C in the range of greater than 1.0°C/min and less than or equal to 5.5°C/min and a maximum attainable temperature in the range of greater than or equal to 700°C and less than or equal to 850°C. The temperature rising rate from greater than 680°C to the maximum attainable temperature may be, for example, greater than or equal to 0.1 °C/min and less than or equal to 3.5°C/min. The holding time of the maximum attainable temperature may be greater than or equal to 1 hour and less than or equal to 10 hours. The firing step may be a multi-step firing, and a plurality of first temperature rising rates and a plurality of second temperature rising rates may be set for each temperature region as long as the first temperature rising rate and the second temperature rising rate are within the above-defined ranges.

In the washing step, the first lithium nickel oxide particles and the second lithium nickel oxide particles prepared in the synthesis step are washed with water and dehydrated to obtain a cake-like composition. The washing with water and the dehydration can be performed by known methods and conditions. The washing with water and the dehydration may be performed within a range in which lithium is not eluted from the lithium nickel oxide particles and battery characteristics are not deteriorated.

In the drying step, the cake-like composition obtained in the washing step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours. Note that when the second lithium nickel oxide composed of single particles is produced, the powder-like composition may be further disintegrated with a jet mill or the like.

In the addition step, at least one of the group consisting of a sulfonate compound and a sulfonic acid solution is added to the cake-like composition obtained in the washing step or the powder-like composition obtained in the drying step. Accordingly, the sulfonate compound can be adhered to the surface of the lithium nickel oxide particles. At least one of the group consisting of a sulfonate compound and a sulfonic acid solution is preferably added to the cake-like composition. The sulfonate compound may be in the form of powder or solution. The sulfonic acid solution is, for example, a methanesulfonic acid solution obtained by dissolving methanesulfonic acid in water. The Li compound remains in the cake-like composition, and the remaining Li compound is dissolved in water contained in the cake-like composition, whereby the sulfonate compound including Li is formed even when the sulfonic acid solution is added. From the viewpoint of enhancing the effects of the present disclosure, a lithium compound or a lithium compound solution may be added to the cake-like composition or powder-like composition together with the sulfonic acid solution. Alternatively, a mixed solution prepared in advance by mixing the sulfonic acid solution with the lithium compound or lithium compound solution may be added to the cake-like composition or powder-like composition. The lithium compound may be, for example, LiOH, and the lithium compound solution may be, for example, an LiOH solution obtained by dissolving LiOH in water. The amounts of the lithium compound and the sulfonic acid solution added to the cake-like composition preferably satisfy the relation 0 ≤ Li compound/sulfonic acid ≤ 1.3 in terms of molar ratio. The amount of the sulfonate compound or sulfonic acid added is preferably greater than or equal to 0.1 mass% and less than or equal to 1 mass% relative to the mass of the lithium nickel oxide. The concentrations of the sulfonic acid solution and the sulfonate compound solution are each, for example, greater than or equal to 0.5 mass% and less than or equal to 40 mass%. The addition step may be performed during or after the washing step, or during or after the drying step, and the timing of implementation may be appropriately changed.

A metal compound including one or more metal elements selected from the group consisting of Sr, Ca, W, Zr, rare earth elements, and Al, and a non-metal compound including one or more non-metal elements selected from the group consisting of P and B, may be adhered to the surface of the lithium nickel oxide particles by adding raw materials of the metal compound and the non-metal compound at any stage selected from during or after the synthesis step, during or after the washing step, during or after the drying step, or during the addition step. Examples of Sr raw materials include Sr(OH)₂, Sr(OH)₂·8H₂O, SrO, SrCO₃, SrSO₄, Sr(NO₃)₂, SrCl₂, and SrAlO₄. Examples of Ca raw materials include Ca(OH)₂, CaO, CaCO₃, CaSO₄, Ca(NO₃)₂, CaCl₂, and CaAlO₄. Examples of Zr raw materials include Zr(OH)₄, ZrO₂, Zr(CO₃)₂, and Zr(SO₄)₂·4H₂O. The metal compounds may be pulverized to appropriately change the particle diameter, and the moisture content, including that from hydrates, may also be adjusted, if needed. Examples of rare earth raw materials include rare earth oxides, hydroxides, and carbonates. Examples of W raw materials include tungsten oxide (WO₃) and lithium tungstates (Li₂WO₄, Li₄WO₅, Li₆W₂O₉). A solution containing W may also be used as a W raw material. Examples of Al raw materials include Al₂O₃, Al(OH)₃, and Al₂(SO₄)₃, although Al derived from the lithium nickel oxide may also be used. Examples of P raw materials include Li₃₋ₓHₓPO₄ (0 ≤ x ≤ 3). Examples of B raw materials include H₃BO₃, Li₃BO₃, Li₂B₄O₇, and LiBO₂. When a liquid raw material is added after the drying step, heat treatment may be performed to evaporate the moisture.

### [Negative Electrode]

The negative electrode 12 has, for example, a negative electrode current collector 40 and a negative electrode mixture layer 41 formed on the surface of the negative electrode current collector 40. The negative electrode mixture layer 41 is preferably formed on both the surfaces of the negative electrode current collector 40. As the negative electrode current collector 40, a metal foil that is stable in the potential range of the negative electrode 12, such as copper or a copper alloy, or a film with the metal disposed on a surface layer may be used. The negative electrode mixture layer 41 may include a negative electrode active material and a binder. The thickness of the negative electrode mixture layer 41 is greater than or equal to 10 µm and less than or equal to 150 µm, for example, on one side of the negative electrode current collector 40. The negative electrode 12 can be produced, for example, by coating a negative electrode mixture slurry including a negative electrode active material and a binder on the surface of the negative electrode current collector 40, drying the coating, and rolling the dried coating to form the negative electrode mixture layer 41 on both the surfaces of the negative electrode current collector 40.

As the negative electrode active material included in the negative electrode mixture layer 41, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by SiOₓ (0.5 ≤ x ≤ 1.6) or Si-containing compounds in which fine Si particles are dispersed in a lithium silicate phase represented by Li_{2y}SiO_{(2+y)} (0 < y < 2), may be used in combination with graphite.

Examples of the binder included in the negative electrode mixture layer 41 include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

### [Separator]

As the separator 13, for example, a porous sheet having ion permeability and insulation properties may be used. Specific examples of the porous sheet include microporous films, woven fabrics, and nonwoven fabrics. Suitable materials for the separator include polyolefins such as polyethylene and polypropylene, and cellulose. The separator 13 may have a single-layer structure or a multilayer structure. Further, a heat-resistant resin layer such as an aramid resin layer, or a filler layer including an inorganic compound filler may be provided on the surface of the separator 13.

### [Non-Aqueous Electrolyte]

The non-aqueous electrolyte has lithium ion conductivity. The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain halogen-substituted derivatives in which at least some of the hydrogen atoms in the solvent molecules are replaced with halogen atoms such as fluorine. Examples of the halogen-substituted derivatives include fluorinated cyclic carbonate esters such as fluoroethylene carbonate (FEC), fluorinated linear carbonate esters, and fluorinated linear carboxylic acid esters such as methyl fluoro-propionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include LiClO₄, LiBF₄, LiPF₆, LiAlC₄, LiSbF₆, LiSCN, LiCF₃SO₃, LiCF₃CO₂, LiAsF₆, LiB₁₀Cl₁₀, lower aliphatic carboxylic acid lithium salts, LiCl, LiBr, LiI, phosphate salts, borate salts, and imide salts. Examples of phosphate salts include lithium difluorophosphate (LiPO₂F₂), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). Among these, LiPF₆ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

### EXAMPLES

Hereinafter, the present disclosure will be described in more detail with reference to Examples and Comparative Examples, but the present disclosure is not limited to Examples.

### <Example 1>

### [Production of Positive Electrode Active Material]

### <Production of First Lithium Nickel Oxide Particle>

Lithium nickel oxide particles having an average particle diameter (D50) of 16 µm and a composition represented by LiNi_{0.85}Co_{0.05}Mn_{0.10}O₂ were provided. The lithium nickel oxide particles have a sharp distribution with a value of (D90 - D10)/average particle diameter of 0.47. Water was added to the above so that the slurry concentration was 1500 g/L, and the mixture was stirred for 15 minutes and filtered to obtain a cake-like composition (washing step). Powdered lithium methanesulfonate was added to the cake-like composition (addition step). The amount of lithium methanesulfonate added was 0.1 mass% relative to the mass of the lithium nickel oxide particles. After the addition step, a drying step was performed under a vacuum atmosphere at 180° C for 2 hours to obtain first lithium nickel oxide particles. It was confirmed by Fourier transform infrared spectroscopy (FT-IR) that lithium methanesulfonate was present on the surfaces of the first lithium nickel oxide particles.

### <Production of Second Lithium Nickel Oxide Particle>

Lithium nickel oxide particles having an average particle diameter (D50) of 4 µm and a composition represented by LiNi_{0.85}Co_{0.05}Mn_{0.10}O₂ were provided. The lithium nickel oxide particles have a sharp distribution with a value of (D90 - D10)/average particle diameter of 0.90. Water was added to the above so that the slurry concentration was 1500 g/L, and the mixture was stirred for 15 minutes and filtered to obtain a cake-like composition (washing step). Powdered lithium methanesulfonate was added to the cake-like composition (addition step). The amount of lithium methanesulfonate added was 0.5 mass% relative to the mass of the lithium nickel oxide particles. After the addition step, a drying step was performed under a vacuum atmosphere at 180° C for 2 hours to obtain second lithium nickel oxide particles. It was confirmed by Fourier transform infrared spectroscopy (FT-IR) that lithium methanesulfonate was present on the surface of the positive electrode active material.

### [Production of Positive Electrode]

The first lithium nickel oxide particles and the second lithium nickel oxide particles were mixed at a mass ratio of 5:5, and the resultant was used as a positive electrode active material. The positive electrode active material, acetylene black, and polyvinylidene fluoride were mixed at a mass ratio of 92:5:3, and N-methyl-2-pyrrolidone (NMP) was used as a dispersion medium to prepare a positive electrode mixture slurry. Next, a positive electrode current collector made of aluminum foil was coated with the positive electrode mixture slurry, the coating was dried and compressed, and then the positive electrode current collector was cut into a predetermined electrode size to obtain a positive electrode in which a positive electrode mixture layer was disposed on both the surfaces of the positive electrode current collector. Note that an exposed portion, in which the surface of the positive electrode current collector was exposed, was provided in a part of the positive electrode. In addition, Y/X = 5.

### [Preparation of Non-Aqueous Electrolyte]

Ethylene carbonate (EC), methyl ethyl carbonate (MEC), and dimethyl carbonate (DMC) were mixed at a volume ratio of 3:3:4. Lithium hexafluorophosphate (LiPF₆) was then dissolved in the resulting mixed solvent so that the concentration was 1.2 mol/L to prepare a non-aqueous electrolyte.

### [Production of Test Cell]

The positive electrode and a negative electrode made of lithium metal were laminated so as to face each other with a separator interposed therebetween to produce an electrode assembly. Subsequently, the electrode assembly and the non-aqueous electrolyte were inserted into an aluminum coin-shaped outer case and sealed by crimping with a press machine to fabricate a test cell. Test cells of other Examples and Comparative Examples were produced in the same manner.

### [Evaluation of Amount of Gas Generated]

The test cell was charged to a cell voltage of 4.3 V (vsLi) at a constant current of 0.2 C under a temperature environment of 25°C and then charged at a constant voltage of 4.3 V (vsLi) until a current value reached 0.02 C. After 20 minutes, the test cell was discharged to a cell voltage of 2.5 V (vsLi) at a constant current of 0.2 C, and the volume (V0) of the battery was calculated by the Archimedes method. Then, the test cell was charged again to a cell voltage of 4.3 V (vsLi) at a constant current of 0.2 C under a temperature environment of 25°C, followed by charging at a constant voltage of 4.3 V (vsLi) until the current value reached 0.02 C. After being allowed to stand under a temperature condition of 80 ± 2°C for 3 days, the test cell was discharged to a cell voltage of 2.5 V (vsLi) at a constant current of 0.2 C under a temperature environment of 25°C. Thereafter, the volume (V1) of the battery was calculated by the Archimedes method in the same manner as V0 to determine the amount of gas generated, indicated by the amount of gas generated ΔV (mL) = V1 (mL) - V0 (mL). The lower the amount of gas generated, the better the high-temperature storage characteristics.

### [Evaluation of Initial Charge Capacity]

The test cell was charged to a cell voltage of 4.3 V (vsLi) at a constant current of 0.2 C under a temperature environment of 25°C, then charged at a constant voltage of 4.3 V (vsLi) until the current value reached 0.02 C, and further discharged to a cell voltage of 2.5 V (vsLi) at a constant current of 0.2 C. The charge capacity at that time was defined as the initial charge capacity.

### <Example 2>

A test cell was produced and evaluated in the same manner as in Example 1, except that the amount of lithium methanesulfonate added was 1 mass% relative to the mass of the lithium nickel oxide particles in the production of the second lithium nickel oxide particles.

### <Example 3>

A test cell was produced and evaluated in the same manner as in Example 1, except that the amount of lithium methanesulfonate added was 0.3 mass% relative to the mass of the lithium nickel oxide particles in the production of the first lithium nickel oxide particles.

### <Example 4>

A test cell was produced and evaluated in the same manner as in Example 1, except that the addition step was omitted in the production of the first lithium nickel oxide particles.

### <Example 5>

A test cell was produced and evaluated in the same manner as in Example 1, except that in the production of the first lithium nickel oxide particles, the addition step was omitted, 0.5 mass% of boric acid H₃BO₃ was added after the drying step, and heat treatment was performed at 300°C under an oxygen atmosphere for 10 hours.

### <Example 6>

A test cell was produced and evaluated in the same manner as in Example 1, except that in the production of the first lithium nickel oxide particles, 0.3 mass% of boric acid H₃BO₃ was added after the drying step, and heat treatment was performed at 300°C under an oxygen atmosphere for 10 hours.

### <Example 7>

A test cell was produced and evaluated in the same manner as in Example 1, except that the composition of the lithium nickel oxide particles was changed to LiNi_{0.80}Co_{0.10}Mn_{0.10}O₂ in the production of the second lithium nickel oxide particles.

### <Comparative Example 1>

A test cell was produced and evaluated in the same manner as in Example 1, except that the addition step was omitted in the production of the first lithium nickel oxide particles and the second lithium nickel oxide particles.

### <Comparative Example 2>

A test cell was produced and evaluated in the same manner as in Example 1, except that the amount of lithium methanesulfonate added was 0.5 mass% relative to the mass of the lithium nickel oxide particles in the production of the first lithium nickel oxide particles, and the amount of lithium methanesulfonate added was 0.1 mass% relative to the mass of the lithium nickel oxide particles in the production of the second lithium nickel oxide particles. Note that Y/X = 0.2.

### <Comparative Example 3>

A test cell was produced and evaluated in the same manner as in Example 1, except that the amount of lithium methanesulfonate added was 0.5 mass% relative to the mass of the lithium nickel oxide particles in the production of the first lithium nickel oxide particles.

### <Comparative Example 4>

A test cell was produced and evaluated in the same manner as in Example 1, except that a positive electrode active material produced according to the following procedure was used in the production of the positive electrode.
(1) Lithium nickel oxide particles having an average particle diameter (D50) of 10 µm and a composition represented by LiNi_{0.85}Co_{0.05}Mn_{0.10}O₂ were provided. The lithium nickel oxide particles have a broad distribution, with a value of (D90 - D10)/average particle diameter of 1.20.
(2) Water was added to the above so that the slurry concentration was 1500 g/L, and the mixture was stirred for 15 minutes and filtered to obtain a cake-like composition (washing step).
(3) Powdered lithium methanesulfonate was added to the cake-like composition (addition step). The amount of lithium methanesulfonate added was 0.5 mass% relative to the mass of the lithium nickel oxide particles. After the addition step, a drying step was performed under a vacuum atmosphere at 180° C for 2 hours to obtain a positive electrode active material. It was confirmed by Fourier transform infrared spectroscopy (FT-IR) that lithium methanesulfonate was present on the surface of the positive electrode active material.

### <Example 8>

A test cell was produced and evaluated in the same manner as in Example 1, except that lithium nickel oxide particles composed of single particles were used in the production of the second lithium nickel oxide particles. Note that the lithium nickel oxide particles had an average particle diameter (D50) of 4 µm and a composition of LiNi_{0.85}Co_{0.05}Mn_{0.10}O₂. The lithium nickel oxide particles also had a sharp distribution with a value of (D90 - D10)/average particle diameter of 0.88.

### <Comparative Example 5>

A test cell was produced and evaluated in the same manner as in Example 7, except that the addition step was omitted in the production of the first lithium nickel oxide particles and the second lithium nickel oxide particles.

### <Examples 9 to 12 and Comparative Examples 6 to 9>

Examples 9 to 13 correspond to Examples 1 to 4, and Comparative Examples 6 to 9 correspond to Comparative Examples 1 to 4. Test cells were produced and evaluated in the same manner as in the corresponding Examples or Comparative Examples, except that in the production of the first lithium nickel oxide particles and the production of the second lithium nickel oxide particles, the composition of the lithium nickel oxide particles was changed to LiNi_{0.50}Co_{0.20}Mn_{0.30}O₂, and a lithium methanesulfonate solution was added to the lithium nickel oxide particles in the addition step without performing the washing step. Note that the concentration of the lithium methanesulfonate solution added was 10 mass%, and the lithium methanesulfonate solution added was added so that the amount of lithium methanesulfonate would correspond to the value shown in Table 3.

### <Example 13 and Comparative Example 10>

Example 13 corresponds to Example 8, and Comparative Example 10 corresponds to Comparative Examples 5. Test cells were produced and evaluated in the same manner as in the corresponding Examples or Comparative Examples, except that in the production of the first lithium nickel oxide particles and the production of the second lithium nickel oxide particles, the composition of the lithium nickel oxide particles was changed to LiNi_{0.50}Co_{0.20}Mn_{0.30}O₂.

### <Examples 14 to 16 and Comparative Examples 11 to 14>

Examples 14 to 16 correspond to Examples 1 to 3, and Comparative Examples 11 to 14 correspond to Comparative Examples 1 to 4. Test cells were produced and evaluated in the same manner as in the corresponding Examples or Comparative Examples, except that the composition of the lithium nickel oxide particles was changed to LiNi_{0.92}Co_{0.04}Mn_{0.04}O₂ in the production of the first lithium nickel oxide particles and in the production of the second lithium nickel oxide particles.

### <Examples 17 to 19 and Comparative Examples 15 to 18>

Examples 17 to 19 correspond to Examples 1 to 3, and Comparative Examples 15 to 18 correspond to Comparative Examples 1 to 4. Test cells were produced and evaluated in the same manner as in the corresponding Examples or Comparative Examples, except that the composition of the lithium nickel oxide particles was changed to LiNi_{0.90}Mn_{0.10}O₂ in the production of the first lithium nickel oxide particles and in the production of the second lithium nickel oxide particles.

Table 1 shows the evaluation results of the test cells in Examples 1 to 7 and Comparative Examples 1 to 4. The amount of gas generated and the initial charge capacity of the test cells in Examples 1 to 7 and Comparative Examples 2 to 4 were each expressed relatively, taking the amount of gas generated and the initial charge capacity of the test cell in Comparative Example 1 as 100.

Table 2 shows the evaluation results of the test cells in Example 8 and Comparative Example 5. The amount of gas generated and the initial charge capacity of the test cells in Example 8 were each expressed relatively, taking the amount of gas generated and the initial charge capacity of the test cell in Comparative Example 5 as 100.

Table 3 shows the evaluation results of the test cells in Examples 9 to 12 and Comparative Examples 6 to 9. The amount of gas generated and the initial charge capacity of the test cells in Examples 9 to 12 and Comparative Examples 7 to 9 were each expressed relatively, taking the amount of gas generated and the initial charge capacity of the test cell in Comparative Example 6 as 100.

Table 4 shows the evaluation results of the test cells in Example 13 and Comparative Example 10. The amount of gas generated and the initial charge capacity of the test cells in Example 13 were each expressed relatively, taking the amount of gas generated and the initial charge capacity of the test cell in Comparative Example 10 as 100.

Table 5 shows the evaluation results of the test cells in Examples 14 to 16 and Comparative Examples 11 to 14. The amount of gas generated and the initial charge capacity of the test cells in Examples 14 to 16 and Comparative Examples 12 to 14 were each expressed relatively, taking the amount of gas generated and the initial charge capacity of the test cell in Comparative Example 11 as 100.

Table 6 shows the evaluation results of the test cells in Examples 17 to 19 and Comparative Examples 15 to 18. The amount of gas generated and the initial charge capacity of the test cells in Examples 17 to 19 and Comparative Examples 16 to 18 were each expressed relatively, taking the amount of gas generated and the initial charge capacity of the test cell in Comparative Example 15 as 100.

**[Table 1]**

| | Composition of lithium nickelate compound particles (Ni/Co/Mn) | Average particle diameter [µm] | | Amount of lithium methanesulfonate added [mass%] | | Amount of gas generated | Initial charge capacity |
|---|---|---|---|---|---|---|---|
| | | First lithium nickel oxide particle | Second lithium nickel oxide particle | First lithium nickel oxide particle | Second lithium nickel oxide particle | | |
| Example 1 | 85/5/10 | 16 | 4 | 0.1 | 0.5 | 63 | 100.1 |
| Example 2 | 85/5/10 | 16 | 4 | 0.1 | 1 | 55 | 100.0 |
| Example 3 | 85/5/10 | 16 | 4 | 0.3 | 0.5 | 60 | 99.8 |
| Example 4 | 85/5/10 | 16 | 4 | - | 0.5 | 70 | 100.1 |
| Example 5 | 85/5/10 | 16 | 4 | 0.5 boric acid | 0.5 | 57 | 100.5 |
| Example 6 | 85/5/10 | 16 | 4 | 0.1 | 0.5 + 0.3 boric acid | 55 | 100.2 |
| Example 7 | First: 85/5/10, Second: 80/10/10 | 16 | 4 | 0.1 | 0.5 | 53 | 99.6 |
| Comparative Example 1 | 85/5/10 | 16 | 4 | - | - | 100 | 100.0 |
| Comparative Example 2 | 85/5/10 | 16 | 4 | 0.5 | 0.1 | 98 | 96.8 |
| Comparative Example 3 | 85/5/10 | 16 | 4 | 0.5 | 0.5 | 60 | 96.7 |
| Comparative Example 4 | 85/5/10 | 10 | | 0.5 | | 85 | 97.0 |

**[Table 2]**

| | Composition of lithium nickelate compound particles (Ni/Co/Mn) | Average particle diameter [µm] | | Amount of lithium methanesulfonate added [mass%] | | Amount of gas generated | Initial charge capacity |
|---|---|---|---|---|---|---|---|
| | | First lithium nickel oxide particle | Second lithium nickel oxide particle | First lithium nickel oxide particle | Second lithium nickel oxide particle | | |
| Example 8 | 85/5/10 | 16 | 4 | 0.1 | 0.5 | 83 | 100.2 |
| | | | | | (single particle) | | |
| Comparative Example 5 | 85/5/10 | 16 | 4 | - | | 100 | 100.0 |
| | | | | | (single particle) | | |

**[Table 3]**

| | Composition of lithium nickelate compound particles (Ni/Co/Mn) | Average particle diameter [µm] | | Amount of lithium methanesulfonate added [mass%] | | Amount of gas generated | Initial charge capacity |
|---|---|---|---|---|---|---|---|
| | | First lithium nickel oxide particle | Second lithium nickel oxide particle | First lithium nickel oxide particle | Second lithium nickel oxide particle | | |
| Example 9 | 50/20/30 | 16 | 4 | 0.1 | 0.5 | 74 | 100.2 |
| Example 10 | 50/20/30 | 16 | 4 | 0.1 | 1.0 | 66 | 100 |
| Example 11 | 50/20/30 | 16 | 4 | 0.3 | 0.5 | 70 | 99.8 |
| Example 12 | 50/20/30 | 16 | 4 | - | 0.5 | 84 | 100.1 |
| Comparative Example 6 | 50/20/30 | 16 | 4 | - | - | 100 | 100 |
| Comparative Example 7 | 50/20/30 | 16 | 4 | 0.5 | 0.1 | 98 | 97.3 |
| Comparative Example 8 | 50/20/30 | 16 | 4 | 0.5 | 0.5 | 60 | 97.1 |
| Comparative Example 9 | 50/20/30 | 10 | | 0.5 | | 88 | 96.8 |

**[Table 4]**

| | Composition of lithium nickelate compound particles (Ni/Co/Mn) | Average particle diameter [µm] | | Amount of lithium methanesulfonate added [mass%] | | Amount of gas generated | Initial charge capacity |
|---|---|---|---|---|---|---|---|
| | | First lithium nickel oxide particle | Second lithium nickel oxide particle | First lithium nickel oxide particle | Second lithium nickel oxide particle | | |
| Example 13 | 50/20/30 | 16 | 4 | 0.1 | 0.5 (single particle) | 60 | 100.3 |
| Comparative Example 10 | 50/20/30 | 16 | 4 | - | (single particle) | 100 | 100.2 |

**[Table 5]**

| | Composition of lithium nickelate compound particles (Ni/Co/Mn) | Average particle diameter [µm] | | Amount of lithium methanesulfonate added [mass%] | | Amount of gas generated | Initial charge capacity |
|---|---|---|---|---|---|---|---|
| | | First lithium nickel oxide particle | Second lithium nickel oxide particle | First lithium nickel oxide particle | Second lithium nickel oxide particle | | |
| Example 14 | 92/4/4 | 16 | 4 | 0.1 | 0.5 | 51 | 100.1 |
| Example 15 | 92/4/4 | 16 | 4 | 0.1 | 1.0 | 45 | 100.0 |
| Example 16 | 92/4/4 | 16 | 4 | 0.3 | 0.5 | 49 | 99.8 |
| Comparative Example 11 | 92/4/4 | 16 | 4 | - | - | 100 | 100 |
| Comparative Example 12 | 92/4/4 | 16 | 4 | 0.5 | 0.1 | 98 | 96.8 |
| Comparative Example 13 | 92/4/4 | 16 | 4 | 0.5 | 0.5 | 48 | 96.6 |
| Comparative Example 14 | 92/4/4 | 10 | | 0.5 | | 80 | 97.2 |

**[Table 6]**

| | Composition of lithium nickelate compound particles (Ni/Co/Mn) | Average particle diameter [µm] | | Amount of lithium methanesulfonate added [mass%] | | Amount of gas generated | Initial charge capacity |
|---|---|---|---|---|---|---|---|
| | | First lithium nickel oxide particle | Second lithium nickel oxide particle | First lithium nickel oxide particle | Second lithium nickel oxide particle | | |
| Example 17 | 90/0/10 | 16 | 4 | 0.1 | 0.5 | 56 | 99.9 |
| Example 18 | 90/0/10 | 16 | 4 | 0.1 | 1.0 | 50 | 100.1 |
| Example 19 | 90/0/10 | 16 | 4 | 0.3 | 0.5 | 54 | 99.7 |
| Comparative Example 15 | 90/0/10 | 16 | 4 | - | - | 100 | 100 |
| Comparative Example 16 | 90/0/10 | 16 | 4 | 0.5 | 0.1 | 98 | 96.8 |
| Comparative Example 17 | 90/0/10 | 16 | 4 | 0.5 | 0.5 | 52 | 96.6 |
| Comparative Example 18 | 90/0/10 | 10 | | 0.5 | | 77 | 97.3 |

In Table 1, the test cells in Examples generated less gas than that in Comparative Example 1 while maintaining the same initial charge capacity as in Comparative Example 1. On the other hand, none of the test cells in Comparative Examples 2 to 4 generated less gas than that in Comparative Example 1 while maintaining the same initial charge capacity as in Comparative Example 1. Accordingly, it was found that both the high-temperature storage characteristics and the charge capacity of the battery could be achieved by using first lithium nickel oxide particles and second lithium nickel oxide particles having a predetermined average particle diameter while disposing more sulfonate compounds in the second lithium nickel oxide particles than in the first lithium nickel oxide particles. From the results shown in Tables 2 to 6, it was also found that similar effects are obtained even when the compositions of the first lithium nickel oxide particles and the second lithium nickel oxide particles, etc. are varied.

The present disclosure will be further described with reference to embodiments below.
Constitution 1:
   A positive electrode active material for a non-aqueous electrolyte secondary battery, including:
   first lithium nickel oxide particles having an average particle diameter of greater than or equal to 8 µm and less than or equal to 30 µm; and
   second lithium nickel oxide particles having an average particle diameter of less than or equal to 6 µm, wherein
   a sulfonate compound represented by the general formula I is present on surfaces of the first lithium nickel oxide particles, and
   when a proportion of a mass of the sulfonate compound present on the surfaces of the first lithium nickel oxide particles relative to a mass of the first lithium nickel oxide particles is defined as X mass%, and a proportion of a mass of the sulfonate compound present on surfaces of the second lithium nickel oxide particles relative to a mass of the second lithium nickel oxide particles is defined as Y mass%, X and Y satisfy a relation Y > X: 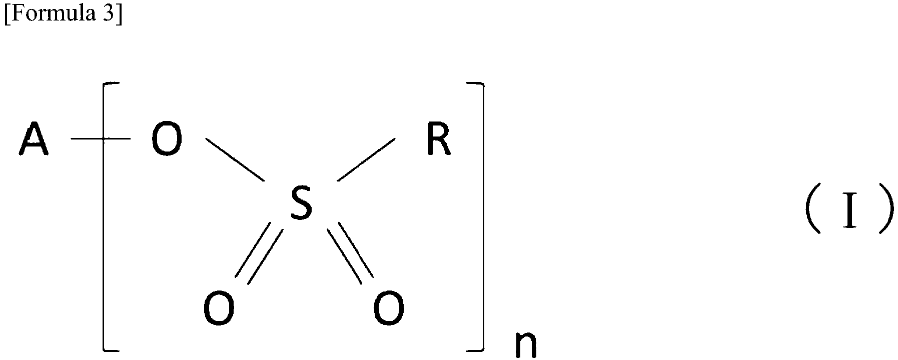 wherein A represents a group I element or a group II element, R represents a hydrocarbon group, and n represents 1 or 2.
Constitution 2:
   The positive electrode active material for a non-aqueous electrolyte secondary battery according to Constitution 1, wherein A represents a group I element. Constitution 3:
   The positive electrode active material for a non-aqueous electrolyte secondary battery according to Constitution 1, wherein A represents Li.
Constitution 4:
   The positive electrode active material for a non-aqueous electrolyte secondary battery according to Constitution 1, wherein R represents an alkyl group.
Constitution 5:
   The positive electrode active material for a non-aqueous electrolyte secondary battery according to any one of Constitutions 1 to 3, wherein R represents a methyl group. Constitution 6:
   The positive electrode active material for a non-aqueous electrolyte secondary battery according to any one of Constitutions 1 to 5, wherein Y satisfies Y ≤ 1.
Constitution 7:
   The positive electrode active material for a non-aqueous electrolyte secondary battery according to any one of Constitutions 1 to 6, having an absorption peak at at least one or more positions near 1238 cm⁻¹, 1175 cm⁻¹, 1065 cm⁻¹, or 785 cm⁻¹ in an infrared absorption spectrum.
Constitution 8:
   The positive electrode active material for a non-aqueous electrolyte secondary battery according to any one of Constitutions 1 to 7, wherein the first lithium nickel oxide particles and the second lithium nickel oxide particles each contain Ni in an amount of greater than or equal to 50 mol% relative to a total molar amount of metal elements excluding Li.
Constitution 9:
   A non-aqueous electrolyte secondary battery, comprising:
   a positive electrode including the positive electrode active material for a non-aqueous electrolyte secondary battery according to any one of Constitutions 1 to 8;
   a negative electrode; and
   a non-aqueous electrolyte.

### REFERENCE SIGNS LIST

10 Non-aqueous electrolyte secondary battery, 11 Positive electrode, 12 Negative electrode, 13 Separator, 14 Electrode assembly, 15 Battery case, 16 Exterior can, 17 Sealing assembly, 18, 19 Insulating plate, 20 Positive electrode tab, 21 Negative electrode tab, 22 Grooved portion, 23 Bottom plate, 24 Lower vent member, 25 Insulating member, 26 Upper vent member, 27 Cap, 28 Gasket, 30 Positive electrode current collector, 31 Positive electrode mixture layer, 40 Negative electrode current collector, 41 Negative electrode mixture layer

## Claims

1. A positive electrode active material for a non-aqueous electrolyte secondary battery, including:
first lithium nickel oxide particles having an average particle diameter of greater than or equal to 8 µm and less than or equal to 30 µm; and
second lithium nickel oxide particles having an average particle diameter of less than or equal to 6 µm, wherein
a sulfonate compound represented by the general formula I is present on surfaces of the second lithium nickel oxide particles, and
when a proportion of a mass of the sulfonate compound present on the surfaces of the first lithium nickel oxide particles relative to a mass of the first lithium nickel oxide particles is defined as X mass%, and a proportion of a mass of the sulfonate compound present on surfaces of the second lithium nickel oxide particles relative to a mass of the second lithium nickel oxide particles is defined as Y mass%, X and Y satisfy a relation Y > X: 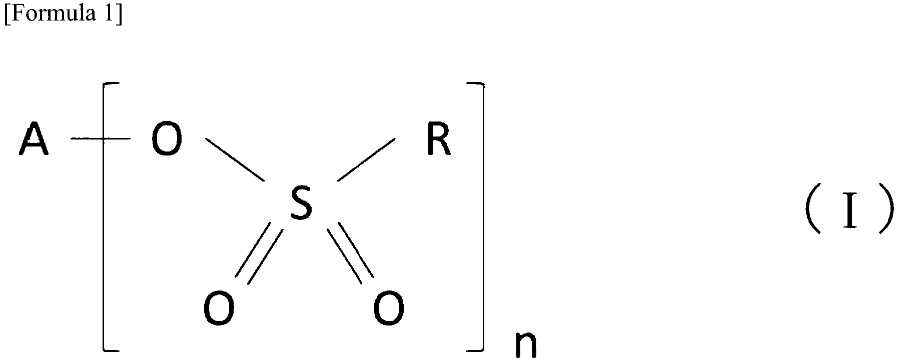 wherein A represents a group I element or a group II element, R represents a hydrocarbon group, and n represents 1 or 2.

2. The positive electrode active material for a non-aqueous electrolyte secondary battery according to claim 1, wherein A represents a group I element.

3. The positive electrode active material for a non-aqueous electrolyte secondary battery according to claim 1, wherein A represents Li.

4. The positive electrode active material for a non-aqueous electrolyte secondary battery according to claim 1, wherein R represents an alkyl group.

5. The positive electrode active material for a non-aqueous electrolyte secondary battery according to claim 1, wherein R represents a methyl group.

6. The positive electrode active material for a non-aqueous electrolyte secondary battery according to claim 1, wherein Y satisfies Y ≤ 1.

7. The positive electrode active material for a non-aqueous electrolyte secondary battery according to claim 1, having an absorption peak at at least one or more positions near 1238 cm⁻¹, 1175 cm⁻¹, 1065 cm⁻¹, or 785 cm⁻¹ in an infrared absorption spectrum.

8. The positive electrode active material for a non-aqueous electrolyte secondary battery according to claim 1, wherein the first lithium nickel oxide particles and the second lithium nickel oxide particles each contain Ni in an amount of greater than or equal to 50 mol% relative to a total molar amount of metal elements excluding Li.

9. A non-aqueous electrolyte secondary battery, comprising:
a positive electrode including the positive electrode active material for a non-aqueous electrolyte secondary battery according to any one of claims 1 to 8;
a negative electrode; and
a non-aqueous electrolyte.
